(19) Europäisches Patentamt
European Patent Office
Office européen des brevets

(11) Veröffentlichungsnummer: **0 387 570 B1**

(12) # EUROPÄISCHE PATENTSCHRIFT

(45) Veröffentlichungstag der Patentschrift: **13.04.94**

(21) Anmeldenummer: **90103634.3**

(22) Anmeldetag: **25.02.90**

(51) Int. Cl.⁵: **C08L 83/10**, C08L 69/00, C08L 51/04, C08L 83/04, //(C08L83/10,51:04,83:04), (C08L69/00,51:04,83:04)

(54) **Mischungen aus Polydiorganosiloxan-Polycarbonat-Block-Cokondensaten mit Siloxanen und kautschukelastischen Polymerisaten.**

(30) Priorität: **11.03.89 DE 3908038**

(43) Veröffentlichungstag der Anmeldung:
**19.09.90 Patentblatt 90/38**

(45) Bekanntmachung des Hinweises auf die Patenterteilung:
**13.04.94 Patentblatt 94/15**

(84) Benannte Vertragsstaaten:
**DE ES FR GB IT NL**

(56) Entgegenhaltungen:
**EP-A- 0 260 559**
**EP-A- 0 283 776**
**EP-A- 0 285 984**

(73) Patentinhaber: **BAYER AG**

**D-51368 Leverkusen(DE)**

(72) Erfinder: **Jung, Alfred, Dr.**
**Bodelschwinghstrasse 12**
**D-4150 Krefeld(DE)**
Erfinder: **Grigo, Ulrich, Dr.**
**Michelsheide 9**
**D-4152 Kempen 3(DE)**
Erfinder: **Nouvertné, Werner, Dr.**
**Burgstrasse 17b**
**D-4150 Krefeld(DE)**

EP 0 387 570 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polydiorganosiloxan-Polycarbonat-Blockcokondensate sind z.B. aus US 3 189 662 bekannt. In der einschlägigen Literatur werden ihre verbesserten mechanischen Eigenschaften bei tieferen Temperaturen beschrieben (z.B. B.M. Beach, R.P. Kambour und A.R. Schultz, J. Polym. Sci., Polym. Lett. Ed. 12, 247 (1974)).

Aus der DE-OS 3 347 071 (Le A 22 802) sind Abmischungen von Siloxan-haltigen Polycarbonaten mit Pfropfpolymerisaten und Copolymerisaten einerseits sowie mit kautschukelastischen Polymerisaten und gegebenenfalls thermoplastischen Polyalkylenterephthalaten andererseits bekannte.

Die Abmischungen haben im ersten Fall eine verbesserte Kerbschlagzähigkeit, insbesondere bei tiefen Temperaturen, sowie in besseres Brandverhalten und im zweiten Fall ein hohe Wärmeformbeständigkeit und einen zu tieferen Temperaturen verschobenen Zäh-Spröd-Übergang.

Der Zusatz Von Polyalkylenterephthalat liefert im zweiten Fall eine besonders hohe Benzinbeständigkeit.

Demgegenüber wurde nun gefunden, daß Abmischungen Sihaltiger Polycarbonate mit Blockcopolymeren durch den Zusatz von Polysiloxanen eine Verbesserung der Benzinbeständigkeit aufweisen, was aus der DE-OS 3 347 071 nicht ableitbar war.

Abmischungen aus aromatischen Polycarbonaten und Pfropf(co)polymeren oder Blockcopolymeren zur Erhöhung der Kraftstoffbeständigkeit sind z.B. aus den EP 0 119 533 und US 4 491 648 prinzipiell bekannt. Sie zeichnen sich durch hohe Beständigkeit gegen Umwelteinfluß-bedingte Rißbildung (EP 0 119 533) bzw. gute Oberflächeneigenschaften (US 4 491 648) aus. Es wird jedoch weder von sehr guten Tieftemperaturzähigkeiten noch von einer Zumischung niedermolekularer Siloxane zur weiteren Verbesserung der Spannungsrißbeständigkeit berichtet.

Abmischungen von Polycarbonat mit Siloxanen sind z.B. aus der DE-OS 2 518 287 (Le A 16 254) ebenfalls bekannt, doch werden Siloxane dort nur als Schlichte für gleichzeitig eingearbeitete Glasfasern beschrieben. Zumischungen von Blockcopolymeren werden jedoch nicht beschrieben. Auch wird der Einfluß dieser Siloxane auf Tieftemperaturzähigkeit und Spannungsrißbeständigkeit des Polycarbonats nicht beschrieben.

In der US 3 640 943 wird die gute Kerbschlagzähigkeit von Abmischungen aus Polysiloxan-Polycarbonat-Blockcopolymeren oder Polydiphenylsiloxan-Blockcopolymeren und Glasfasern beschrieben. Über den Einfluß von zusätzlich eingemischten geringen Mengen an niedermolekularen Siloxanen, insbesondere in Verbindung mit weiteren Pfropf(co)polymeren oder Blockcopolymeren, auf die Tieftemperaturzähigkeit und die Spannungsrißbeständigkeit solcher Blendsysteme wird jedoch nicht berichtet.

Aus dem US-Patent 4 088 711 sind Mischungen aus gegebenenfalls Siloxan-haltigen Polycarbonaten mit selektiv hydrierten Blockcopolymeren bekannt, die ausgezeichnete Formstabilität und Verträglichkeit haben.

Aus dem US-Patent 4 537 930 sind benzinbeständige Mischungen von Polycarbonaten mit geringen Mengen an selektiv hydrierten Blockcopolymeren bekannt.

Aus der DE-OS 2 725 663, beziehungsweise dem GB-PS 1 581 167 sind Mischungen von teilweise hydrierten Blockcopolymeren mit thermoplastischen Harzen bekannt, die außerdem noch ein Strecköl enthalten können.

Als thermoplastische Harze sind auch Polycarbonate geeignet, die auch Siloxanbindungen enthalten können (Seite 28 und 29 der DE-OS, beziehungsweise Seiten 6 und 7 der GB-PS).

Aus dem US-Patent 2 999 835 sind Mischungen von Polycarbonaten mit Polysiloxanen bekannt.

Aus US-PS 4 767 818 sind Siloxane als Flammschutzmittel gegen das Abtropfverhalten bekannt.

Gegenstand der vorliegenden Erfindungen sind Mischungen, enthaltend

a) 75 - 98,99 Gew.-Teile Polydiorganosiloxan-Polycarbonat-Blockcokondensate mit mittlerem Molekulargewicht $\overline{M}_w$ von 10.000 bis 200.000 und mit einem Gehalt an aromatischen Carbonatstruktureinheiten zwischen 90 Gew.-% und 99,5 Gew.-% und einem Gehalt an Polydiorganosiloxanstruktureinheiten zwischen 10 Gew.-% und 0,5 Gew.-%, wobei die Blockcopolymeren ausgehend von $\alpha,\omega$-Bishydroxyaryloxyendgruppenhaltigen Polydiorganosiloxanen mit einem Polymerisationsgrad $P_n$ von 5 bis 100 hergestellt werden,

oder eine Mischung aus Polydiorganosiloxan-Polycarbonat-Blockcokondensaten mit polysiloxanfreien, thermoplastischen Polycarbonaten; wobei der Gesamtgehalt an Polydiorganosiloxanstruktureinheiten in dieser Mischung zwischen 0,5 und 10 Gew.-% beträgt,

und

c) 1 bis 10 Gew.-Teile kautschukelastische Polymerisate mit einer Glasübergangstemperatur unter -20 °C,

dadurch gekennzeichnet, daß sie

d) 0,01 bis 5 Gew.-Teile eines Phenylgruppen enthaltenden Polysiloxans enthalten, wobei das Polysiloxan eine relative Viskosität zwischen 100 und 5000 $mm^2$/sek (gemessen mit dem Kugelfallviskosimeter bei 25 °C) hat und die Summe der Gewichtsteile aus den Komponenten a + c + d 100 Gew.-Teile betragen soll.

Derartige Mischungen sind thermoplastisch und haben eine erhöhte Benzinbeständigkeit und eine gute Tieftemperaturzähigkeit.

Bevorzugte Gewichtsmengen an d) sind 0,05 Gew.-% bis 3 Gew.-%.

Komponenten

Polydiorganosiloxan-Polycarbonat-Blockcokondensate a) im Sinne der Erfindung sind Reaktionsprodukte aus Diphenolen, ihren reaktionsfähigen Derivaten auf Basis von Polydiorganosiloxan-Oligomeren mit reaktiven Endgruppen bzw. Mischungen der Oligomeren Kohlensäurevorläufern oder Mischungen dieser Reaktionsprodukte.

Solche Polydiorganosiloxan-Polycarbonat-Blockcokondensate sind dadurch gekennzeichnet, daß sie in der Polymerkette einerseits aromatische Carbonatstruktureinheiten (I) und andererseits Aryloxyendgruppenhaltige Polydiorganosiloxane (Ia) enthalten,

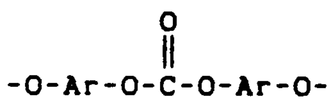

(I)

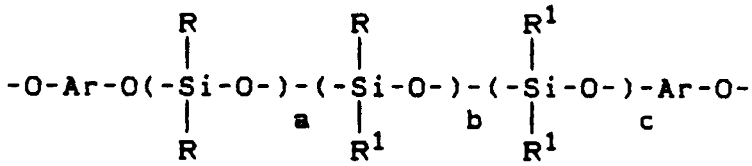

(Ia)

worin

Ar gleiche oder verschiedene Arylenreste aus Diphenolen sind und

R und $R^1$ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten,

und

die Anzahl der Diorganosiloxy-Einheiten n = a + b + c = 5 bis 100, vorzugsweise 20 bis 80 ist.

Alkyl ist in vorstehender Formel (Ia) beispielsweise $C_1$-$C_{20}$-Alkyl; Alkenyl ist in vorstehender Formel (Ia) beispielsweise $C_2$-$C_6$-Alkenyl; Aryl ist in vorstehender Formel (Ia) $C_6$-$C_{14}$-Aryl. Halogeniert bedeutet in vorstehender Formel (Ia) teilweise oder vollständig chloriert, bromiert oder fluoriert Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Die Blockcokondensate gemäß Komponente a) haben eine relative Viskosität (gemessen an einer Lösung von 0,5 g Blockcokondensat in 1 dl Dichlormethan bei 25 °C) von 1,15 bis 1,38, vorzugsweise von 1,20 bis 1,35.

Bevorzugte Polycarbonatpolydiorganosiloxan-Blockcokondensate a) enthalten Diorganosiloxaneinheiten der Formel (Ib)

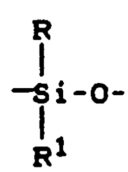

(Ib)

worin R und $R^1$ unabhängig voneinander $C_1$-$C_{20}$-Alkyl, besonders bevorzugt $C_1$-$C_6$-Alkyl, $C_6$-$C_{14}$-Aryl, besonders bevorzugt Phenyl bedeuten, wobei die Alkyl- und Arylreste einmal bis vollständig durch Fluor,

Chlor oder Brom substituiert sein können.

Besonders bevorzugte Reste R und $R^1$ umfassen Ethyl, Propyl, n- und tert.-Butyl, Chlormethyl, Trifluorpropyl, Phenyl, Chlorphenyl, Naphthyl, insbesondere Methyl.

90 bis 99,5, vorzugsweise 93 bis 99 Gew.-% des Blockcokondensats a) bestehen aus Carbonylgruppen, Diphenolresten, gegebenenfalls Resten von Verzweigungsmitteln und gegebenenfalls aus Endgruppen.

Bevorzugte Diphenolreste entsprechen beispielsweise den Formeln

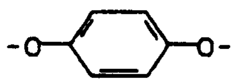

(II)

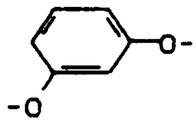

(III) und

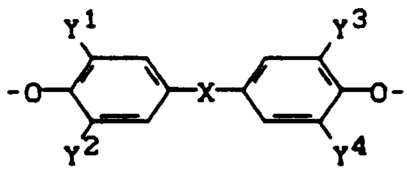

(IV)

worin X eine Einfachbindung,

$-CH_2-$, 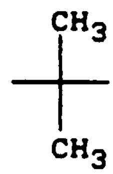 ,

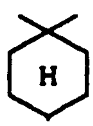 , -O-, -S-, $-SO_2-$ oder 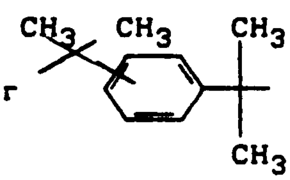

und $Y^1$ bis $Y^4$ unabhängig voneinander Wasserstoff, $C_1$-$C_4$-Alkyl, vorzugsweise Methyl, oder Halogen, vorzugsweise Chlor oder Brom, bedeuten.

Bevorzugte Diphenolreste sind beispielsweise die Reste von
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Bevorzugte Verzweigungsmittel für die Blockcokondensate a) sind mindestens trifunktionelle Verbindungen, wie sie z.B. in den DE-OS 1 570 533 und 1 595 762 sowie in der US-PS 3 544 514 beschrieben sind, nämlich vorzugsweise dreiwertige Phenole, aromatische Tricarbonsäuren und Hydroxycarbonsäuren mit mindestens drei funktionellen Gruppen. Beispiele bevorzugter Verzweigungsmittel sind:
2,4-Bis-(4-hydroxyphenyl-isopropyl)-phenol,
2,6-Bis-(2′-hydroxy-5′-methylbenzol)-4-methylphenol,
2-(4-Hydroxyphenyl)-2-(2,4-dihydroxyphenyl)-propan,
1,4-Bis-(4,4′-dihydroxytriphenyl-methyl)-benzol,

2,4-Dihydroxybenzoesäure, Trimesinsäure, Cyanurchlorid,
3,3-Bis-(4-hydroxyphenyl)-2-oxo-2,3-dihydroindol sowie
3,3-Bis-(4-hydroxy-3-methyl-phenyl)-2-oxo-2,3-dihydroindol.

Wenn die Blockcokondensate a) in verzweigter Form eingesetzt werden sollen, beträgt die Menge verzweigender Gruppen in der Regel 0,05 bis 2 Mol.-%, bezogen auf die Diphenolreste des Blockcokondensats A.

Bevorzugte Endgruppen für die Blockcokondensate a) sind Reste von Phenol, Benzoesäure, Mono- und Dialkylphenolen und Mono- und Dialkylbenzoesäuren, deren Alkylsubstituenten insgesamt bis zu 20 C-Atome pro Endgruppe tragen können. Besonders bevorzugte Endgruppen entsprechen der Formel (V)

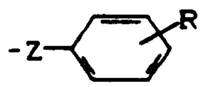

(V)

worin
Z = -O- oder

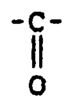

bedeutet und R = H oder
$-C_1-C_{15}$-Alkyl bedeutet.

Beispiele bevorzugter Endgruppen sind die Reste von Phenol, p-tert.-Butylphenol, p-Isooctyl-phenol, p-Nonylphenol, 3,5-Di-tert.-butyl-phenol, 2-(3,5-Dimethylheptyl)-phenol und 4-(3,5-Dimethylheptyl)-phenol.

Anstelle der freien Phenole können deren Halogenkohlensäureester anstelle der Carbonsäuren ihre Säurechloride eingesetzt werden.

Die Menge der Endgruppen beträgt vorzugsweise 1 bis 10 Mol.-%, bezogen auf die Diphenolreste des Blockcokondensats A. Die Herstellung der Blockcokondensate a) kann beispielsweise aus $\alpha,\omega$-Bis-(hydroxyaryloxy)-polydiorganosiloxanen, Bisphenolen, Kohlensäurederivaten, z.B. Phosgen, gegebenenfalls Kettenabbrechern und gegebenenfalls Verzweigungsmitteln nach dem Zweiphasengrenzflächenverfahren unter üblichen Bedingungen erfolgen. Auch das Umesterungs- und das sogenannte Pyridinverfahren sind zur Herstellung geeignet.

Die Zahl der Siliciumatome pro Einheit (= mittlere Siloxanblocklänge) kann man bei der Herstellung durch Bestimmung der Endgruppen am Polysiloxan-Ausgangsmaterial ermitteln.

Die Ermittlung des Polymerisationsgrades der Siloxanblöcke am fertigen Blockcokondensat wird durch Verseifung des Polycarbonatanteils möglich. Der nicht verseifbare Siloxanblock wird so der polymeranalytischen Untersuchung (GPC, HPLC, Endgruppenbestimmung) zugänglich.

Die Komponente a) kann auch eine Mischung aus üblichen polysiloxanfreien, thermoplastischen Polycarbonaten mit einer relativen Viskosität von 1,15 bis 1,38 und ein Polydiorganosiloxan-Polycarbonat-Blockcokondensat mit einer relativen Viskosität zwischen 1,15 und 2,5 sein, die so zusammengesetzt ist, daß der Gesamtgehalt an Polydiorganosiloxan-Einheiten, bezogen auf Komponente a) wiederum 0,5 bis 10 Gew.-%, vorzugsweise 1 bis 7 Gew.-% beträgt.

In den Fällen, in denen die Komponente a) eine Mischung aus siloxanhaltigen Polycarbonaten und siloxanfreien Polycarbonaten ist, können die siloxanhaltigen Polycarbonate auch einen Gehalt an Polydiorganosiloxan-Einheiten von mehr als 10 Gew.-% enthalten, sofern durch Abmischung mit den siloxanfreien Polycarbonaten der Gehalt in der Polycarbonatmischung wiederum zwischen 0,5 und 10 Gew.-% liegt.

Die Blockcokondensate gemäß Komponente a) sind, wie bereits eingangs erwähnt, literaturbekannt oder nach literaturbekannten Verfahren herstellbar.

Die kautschukelastischen Polymerisate c) im Sinne der Erfindung umfassen Copolymerisate - insbesondere Pfropfcopolymerisate - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat, (Meth)-Acrylsäureester mit 1 bis 18 C-Atomen in der Alkoholkomponente und Kohlenmonoxid, also Polymerisate, wie sie z.B. in "Methoden der Organischen Chemie", (Houben-Weyl), Bd. 14/1, Georg-Thieme-Verlag, Stuttgart 1961, Seiten 393-406, und in C.B. Bucknall, "Toughened

Plastics", Appl. Science Publishers, London 1977, beschrieben sind. Bevorzugte Polymerisate gemäß Komponente c) besitzen einen Gelgehalt von über 20, vorzugsweise über 40 Gew.-%.

Bevorzugte Polymerisate gemäß Komponente c) sind Ethylen-Vinylacetat-Copolymerisate mit 15 bis 70 Gew.-% Vinylacetat und Schmelzindices von nicht fließfähig bis 1.000, vorzugsweise von 0,1 bis 20, gemessen bei 190 °C und 2,16 kp Belastung nach DIN 53 753.

Weiterhin bevorzugt sind Terpolymerisate aus Ethylen, Acrylsäurealkylester bzw. Vinylacetat und Kohlenmonoxid.

Bevorzugte Polymerisate gemäß Komponente c) sind z.B. die sogenannten EPM- bzw. EPDM-Kautschuke, in denen das Gewichtsverhältnis von Ethylen- Su Propylenresten im Bereich von 40 : 60 bis 90 : 10, vorzugsweise 40 : 60 bis 65 : 35 liegt.

Die Mooney-Viskositäten (ML 1+4/100 °C gemäß DIN 53 523) der unvernetzten EPM- bzw. EPDM-Kautschuke liegen zwischen 25 und 100 ME, vorzugsweise zwischen 35 und 90 ME. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1.000 C-Atome aufweisen können. Als geeignete Dien-Monomere in EPDM seien beispielsweise genannt: konjugierte Diene, z.B. Isopren und Butadien und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien, cyclische Diene, z.B Cyclopentadien, Cyclohexadien, Cyclooctadien und Dicyclopentadien; Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene, z.B. 3-Methyltricyclo(5,2,1,0,2,6)-3,8-decadien.

Bevorzugt seien die nichtkonjugierten Diene Hexadien-1,5, Ethylidennorbornen oder Dicyclopentadien angeführt. Der Diengehalt im EPDM beträgt vorzugsweise 0,5 bis 10 Gew.-%. Derartige EPM- bzw. EPDM-Kautschuke sind z.B. in der DE-OS 28 08 709 (Le A 18 705) beschrieben.

Bevorzugte Polymerisate gemäß Komponente c) sind auch gegebenenfalls selektiv hydrierte Blockcopolymerisate eines vinylaromatischen Monomeren X und eines konjugierten Diens Y von X-Y-Typ oder X-$(Y\text{-}X)_r$-Typ (mit r = 1-5) oder Y-$(X)_s$-Typ (mit s = 3-5).

Diese Blockcopolymerisate können nach bekannten Verfahren hergestellt werden. Im allgemeinen kann für die Herstellung der geeigneten X-Y-Blockcopolymerisate aus Styrol, $\alpha$-Methylstyrol, Vinyltoluol usw. und aus konjugierten Dienen wie Butadien, Isopren usw., die für die Herstellung von Styrol-Dienblockcopolymerisaten verwendete Technologie benutzt werden, die in "Encyclopedia of Polymer Science and Technology", Bd. 15, Interscience, N.Y. (1971) auf den Seiten 508 ff. beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben. Derartige selektiv hydrierte Blockpolymerisate werden z.B. in der DE-OS 3 000 282 beschrieben.

Bevorzugte Polymerisate gemäß Komponente c) sind z.B. mit Styrol und/oder Acrylnitril und/oder (Meth)-Acrylsäureestern gepfropfte Polybutadiene, Butadien/Styrol-Copolymerisate und Poly(meth)-acrylsäureester, z.B. Copolymerisate aus Styrol oder Alkylstyrol und konjugierten Dienen (schlagfestes Polystyrol), d.h. Copolymerisate der in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate gemäß Komponente c) sind z.B. Pfropfpolymerisate, die durch Pfropfreaktion von

I. 10 bis 40, vorzugsweise 10 bis 35, insbesondere 15 bis 25 Gew.-%, bezogen auf Komponente c), mindestens eines (Meth-)Acrylsäuresters und/oder eines Gemisches aus
10 bis 35, vorzugsweise 20 bis 35 Gew.-%, bezogen auf Gemisch, Acrylnitril und
65 bis 90, vorzugsweise 65 bis 80 Gew.-%, bezogen auf Gemisch, Styrol auf

II. 60 bis 90, vorzugsweise 65 bis 90, insbesondere 75 bis 85 Gew.-%, bezogen auf Komponente c), eines Butadien-Polymerisats mit mindestens 70 Gew.-%, bezogen auf II, Butadienresten als Pfropfgrundlage

erhältlich sind, wobei vorzugsweise der Gelanteil der Pfropfgrundlage II = 70 % (in Toluol gemessen), der Pfropfgrad g 0,15 bis 0,55 und der mittlere Teilchendurchmesser $d_{50}$ des Pfropfpolymerisats 0,2 bis 0,6, vorzugsweise 0,3 bis 0,5 $\mu$m betragen.

(Meth-)Acrylsäureester I sind Ester der Acrylsäure bzw. Methacrylsäure und einwertiger Alkohole mit 1 bis 18 C-Atomen.

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I üblicherweise nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten.

Pfropfpolymerisate im Sinne der Erfindung sind solche, die durch Pfropfpolymerisation von Vinylmonomeren I in Gegenwart eines Polymerisats II erhalten werden.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugenmessungen (W. Scholtan, H. Lange, Kolloid. Z. und Z. Polymere 250 (1972), 782 - 796) oder mittels Elektronenmikroskopie und anschließende Teilchenauszählung (G. Kämpf, H. Schuster, Angew. Makromolekulare Chemie 14, (1970), 111 - 129) oder mittels Lichtstreuungsmessungen.

Besonders bevorzugte Polymerisate gemäß Komponente c) sind z.B. auch Pfropfpolymerisate aus

III. 25 bis 98 Gew.-%, bezogen auf Komponente c), Acrylatkautschuk mit einer Glasübergangstemperatur unter -20 °C als Pfropfgrundlage und

IV. 2 bis 75 Gew.-%, bezogen auf Komponente c), mindestens eines polymerisierbaren ethylenisch ungesättigten Monomeren, dessen bzw deren in Abwesenheit von III entstandenen Mono- bzw. Copolymerisate eine Glasübergangstemperatur über 25 °C hätten, als Pfropfmonomere.

Die Acrylatkautschuke III der Polymerisate gemäß Komponente c) sind vorzugsweie Polymerisate aus Acrylsäurealkylester, gegebenenfalls mit bis zu 40 Gew.-% anderer polymerisierbarer ethylenisch ungesättigter Monomerer.

Sofern die als Pfropfgrundlage III eingesetzten Acrylatkautschuke ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl, Ethyl-, Butyl-, Octyl- und 2- Ethylhexylester, Halogenalkylester, vorzugsweise Halogen-$C_1$-$C_8$-Alkylester wie Chlorethylacrylat, und aromatische Ester wie Benzylacrylat und Phenethylacrylat. Sie können einzeln oder in Mischung versetzt werden Die Acrylatkautschuke III können unvernetzt oder vernetzt, vorzugsweise partiell vernetzt sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit drei bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen wie z.B. Trivinyl- und Triallylcyanurat und -isocyanurat, Tris-acryloyl-s-triazine, insbesondere Triallylcyanurat; polyfunktionelle Vinylverbindungen wie Di- und Trivinylbenzol, aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf Pfropfgrundlage III.

Bei cyclischen vernetzenden monomeren mit mindestens 3 ethylenisch ungesättigten Gruppen ist es vorteilhaft, die Menge auf 1 Gew.-% der Pfropfgrundlage III zu beschränken.

Bevorzugte "andere" polymerisierbare, ethylenisch ungesättigte Monomere, die neben den Acrylsäureestern gegebenenfalls zur Herstellung der Pfropfgrundlage III dienen können, sind z.B. Acrylnitril, Styrol, -Methylstyrol, Acrylamide, Vinyl-$C_1$-$C_6$-alkylether, Butadien, Isopren. Bevorzugte Acrylatkautschuke als Pfropfgrundlage III sind Emulsionspolymerisate, die einen Gelgehalt von 60 Gew.-% aufweisen.

Der Gelgehalt der Pfropfgrundlage III wird bei 25 °C in Dimethylformamid bestimmt (M. Hoffmann, H. Krömer, R. Kuhn, Polymeranalytik I und II, Georg-Thieme-Verlag, Stuttgart, 1977).

Acrylatkautschuke als Pfropfgrundlage III können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage III kann 0,1 bis 80, bevorzugt 10 bis 50 Gew.-%, bezogen auf III, betragen. Schale und Kern können unabhängig voneinander unvernetzt, teilvernetzt oder

hochvernetzt sein.

Besonders bevorzugte Pfropfgrundlagen III für Pfropfpolymerisate gemäß Komponente c) auf Basis von Polyacrylsäureestern seien nachfolgend zusammengefaßt:

1. Acrylsäureesterpolymerisate und -copolymerisate ohne Dienkautschukkern und
2. Acrylsäureesterpolymerisate und -copolymerisate, die einen Dienkautschukkern enthalten.

Die Pfropfausbeute, d.h. der Quotient aus der Menge des ausgepfropften Monomeren IV und der Menge des eingesetzten Pfropfmonomeren IV, beträgt in der Regel 20 bis 80 Gew.-%. Die Bestimmung kann wie bei M. Hoffmann, H. Krömer, R. Kuhn, Polymeranalytik, Bd. 1, Georg-Thieme-Verlag, Stuttgart, 1977, beschrieben, erfolgen.

Bevorzugte Pfropfmonomere IV sind $\alpha$-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gewichtsverhältnis 90 : 10 bis 50 : 50.

Solche Pfropfpolymerisate gemäß Komponente c) auf Basis von Polyacrylsäureestern werden z.B. in der DE-AS 2 444 584 (= US-PS 4 022 748) und in der DE-OS 2 726 256 (= US-PS 4 096 202) beschrieben.

Besonders vorteilhafte Pfropfpolymerisate dieser Art erhält man, wenn man 2 bis 20, vorzugsweise 3 bis 15 Gew.-%, bezogen auf c), Monomer IV auf 80 bis 98, vorzugsweise 85 bis 97 Gew.-%, bezogen auf c), des vollständig gebrochenen und in Wasser aufgeschlämmten Latex von III in Abwesenheit von Suspendiermittel aufpfropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von Komponente c) in der erfindungsgemäßen Mischung 0,05 bis 3, vorzugsweise 0,1 bis 2, insbesondere 0,2 bis 1 $\mu$m beträgt.

Der Begriff "in Abwesenheit von Suspendiermittel" bedeutet die Abwesenheit von Stoffen, die nach Art und Menge die Pfropfmonomeren IV in der wäßrigen Phase suspendieren könnten. Die Definition schließt die Anwesenheit von Stoffen nicht aus, die z.B. bei der Herstellung einer gepfropften Pfropfgrundlage III suspendierend gewirkt haben, in derartigen Fällen muß das Koagulations- oder Fällungsmittel, das zum Brechen des Latex III eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren IV in der wäßrigen Phase keine (stabile) Emulsion oder Dispersion ergeben.

Ein derart in Abwesenheit von Suspendiermittel hergestelltes Pfropfpolymerisat gemäß Komponente c) ist als Bestandteil der erfindungsgemäßen Formmassen in den anderen Harzkomponenten zu einer außergewöhnlich niedrigen Teilchengröße verteilbar, die relativ unverändert auch längere Verarbeitungszeiten bei höherer Temperatur übersteht.

Der Begriff "außergewöhnlich niedrige Teilchengröße" meint, daß Anzahl, Form und Größe der einzusetzenden Pfropfpolymerisatteilchen mit Anzahl, Form und Größe der in die geschmolzenen anderen Harzkomponenten eingebrachten Pfropfpolymersatteilchen auch nach dem Homogenisieren im wesentlichen noch übereinstimmen.

Als Pfropfgrundlage III können auch solche Acrylatkautschuke verwendet werden, die als wäßrige Emulsion (Latex) anfallen und deren Latexpartikel 1 bis 20 Gew.-%, vorzugsweie 1 bis 10 Gew.-%, bezogen auf III, bereits in wäßriger Emulsion aufgepfropfte Monomere enthalten, deren Homo- bzw. Copolymerisate Glastemperaturen > 0 °C aufweisen würden.

Bevorzugte derartige aufgepfropfte Monomere sind Alkylacrylate, Alkylmethacrylate, Styrol, Acrylnitril, $\alpha$-Methylstyrol und/oder Vinylacetat.

Derartige Pfropfgrundlagen III werden z.B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Als Pfropfgrundlagen III für Acrylatkautschuke dieser besonderen Ausführungsform eignen sich also vorzugsweise auch in wäßriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten, polymerisierbaren Monomeren.

Beispiele für besonders bevorzugte, kautschukelastische Polymerisate sind die partiell hydrierten Butadien-Styrol-Butadien-Blockcopolymerisate, wie sie die Firma Shell Company unter der Bezeichnung Kcaton G® im Handel hat.

Niedermolekulare, phenylgruppenhaltige Polysiloxane d) im Sinne der Erfindung haben relative Viskositäten zwischen 100 und 5.000 $mm^2$/Sek., vorzugsweise 100 bis 1.000 $mm^2$/Sek., (gemessen mit dem Kugelfallviskosimeter bei 25 °C in bekannter Weise),
Struktureinheiten der Formel (Ic)

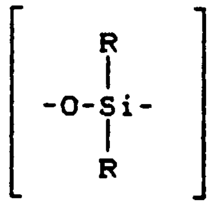 (Ic),

worin

R Alkyl und/oder Aryl ist,

und mindestens einen Si-Phenylrest.

Derartige Polysiloxane sind bekannt, beziehungsweise im Handel erhältlich (siehe beispielsweise Baysilone®-PH der BAYER AG) oder nach bekannten Verfahren synthetisierbar.

Bevorzugte niedermolekulare, phenylgruppenhaltige Polysiloxane d) sind cyclische phenylgruppenhaltige Polysiloxane, insbesondere solche der Formel (VI)

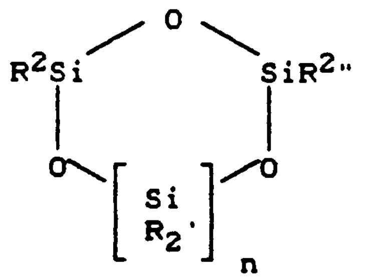 (VI)

worin R, R′ und R" unabhängig voneinander Alkyl oder Aryl, vorzugsweise Methyl oder Phenyl sind, n = 1 oder 2 ist und mindestens im Rest R oder R′ oder R″ ein Phenyl-Rest ist, die eine Viskosität von 200 bis 1.000 mPa/sec. haben.

Bevorzugte niedermolekulare Phenyl-haltige Polysiloxane sind auch Copolymere von Dimethyl- und Diphenylsiloxan-Einheiten, die blockartig oder statistisch angeordnet sein können und die eine Viskosität von 200 bis 1.000 mPa/sec haben. (Die Viskositätsmessung erfolgt wiederum nach bekannten Methoden, beispielsweise auch hier mit dem Kugelfallviskosimeter bei 25 °C in bekannter Weise.)

Besonders bevorzugte Polysiloxane sind Octaphenylcyclotetrasiloxan und ein Polydiphenyl-dimethylsiloxan mit etwa 50 Gew.-% Diphenylsiloxy-Einheiten und einer Viskosität von 300 $mm^2$/Sek..

Die erfindungsgemäßen Mischungen können für die Einzelkomponenten a), c) und d) übliche Verarbeitungshilfsmittel, wie z.B. Fließ- und Entformungsmittel, Füllstoffe und Verstärkungsstoffe, wie z.B. Talk, Kreide oder Glasfasern, Farbpigmente, wie z.B. Titandioxid oder Ruß und/oder Flammschutzmittel, wie z.B. Halogenverbindungen, Antimonoxid, Sulfonate u.a. enthalten.

Gegenstand der vorliegenden Erfindung sind somit außerdem thermoplastische Mischungen, enthaltend die Komponenten a), d) und c) sowie mindestens ein Additiv, ausgewählt aus Fließmitteln, Entformungsmitteln, Füllstoffen, Verstärkungsstoffen, Pigmenten und Flammschutzmitteln.

Die Herstellung der erfindungsgemäßen Mischungen aus den Komponenten a), c) und d) und gegebenenfalls den üblichen, vorstehend genannten Additiven erfolgt in Extrudern, Knetern, Walzen oder Rührgefäßen, vorzugsweise in Extrudern, in der Schmelze bei Temperaturen zwischen 280 und 320 °C.

Gegenstand der vorliegenden Erfindung ist somit auch ein Verfahren zur Herstellung der erfindungsgemäßen Mischungen, enthaltend die Komponenten a) + c) + d) sowie gegebenenfalls in diesen drei Komponentenvariationen jeweils mindestens ein Additiv, ausgewählt aus Fließmitteln, Entformungsmitteln, Füllstoffen, Verstärkungsstoffen, Pigmenten und Flammschutzmitteln, das dadurch gekennzeichnet ist, daß man die jeweiligen Komponenten und gegebenenfalls die Additive in geeigneten Mischaggregaten in der Schmelze bei Temperaturen zwischen 280 °C und 320 °C vermischt und anschließend in üblicher Weise abkühlt und granuliert oder sogleich zu geeigneten Formkörpern verarbeitet.

Zur Herstellung der erfindungsgemäßen Mischungen kann es angezeigt sein, zunächst ein Konzentrat aus den Komponenten a) und d) herzustellen, und dieses mit einer größeren Menge a) auf den gewünschten Gehalt an d) zu verdünnen. Die Herstellung der Konzentrate kann in den vorgenannten Mischaggregaten bei Temperaturen zwischen 50 °C und 320 °C, vorzugsweise 150 °C und 320 °C erfolgen.

Darüberhinaus ist die Herstellung der Mischungen auch durch gemeinsame Ausdampfextrusion der Mischungskomponenten aus einem Gemisch der jeweiligen Lösungen in aliphatischen und aromatischen Halogenkohlenwasserstoffen, wie Dichlormethan und Monochlorbenzol, über geeignete Extruder mit einer Vorrichtung zur Voreindampfung möglich.

Die Mischungen der vorliegenden Erfindung können zur Herstellung von Formkörpern jeder Art nach bekannten Verfahren verwendet werden. Insbesondere können Formkörper durch Extrusion oder Spritzguß auf den hierfür üblichen Aggregaten hergestellt werden. Beispiele für herstellbare Formkörper sind Karosserieteile und Gehäuseteile, z.B. für elektrische Geräte und Apparaturen wie Haushaltsgeräte und Platten für den Bausektor oder Folien. Nachfolgend wird die Erfindung durch Beispiele veranschaulicht und mit dem Stand der Technik verglichen.

Beispiele

Es wurden folgende Legierungskomponenten eingesetzt:

a) Copolycarbonat auf Basis von Bisphenol A und 5 Gew.-% Polydimethylsiloxan der mittleren Blocklänge ($P_n$) 80 mit einer relativen Lösungsviskosität von 1,29, hergestellt gemäß DE-OS 3 347 071 (Le A 22 802).

c) Partiell hydriertes Styrol-Butadien-Styrol-Blockcopolymeres mit Blockmolekulargewichten 10.000 - 55.000 - 10.000 (Kraton G® 1651 der Firma Shell, siehe US-Patent 4 088 711, Beispiel 1 und US-Patent 4 537 930, Tabelle 1).

d 1) Octaphenylcyclotetrasiloxan.

d 2) Polydiphenyl-dimethyl-siloxan mit etwa 50 Gew.-% Diphenylsiloxy-Einheiten und einer Viskosität von 300 $mm^2$/Sek., wobei die Viskosität wiederum mit dem Kugelfallviskosimeter bei 25 °C in bekannter Weise gemessen wurde.

Zur Herstellung der Mischungen wurden zunächst über eine Lösung der Komponenten Konzentrate der Siloxane im betreffenden Polycarbonat gefertigt. Die gewünschten Einstellungen wurden durch Compoundierung der Konzentrate mit dem jeweiligen Polycarbonat und dem eingesetzten Styrol-Butadien-Blockcopolymeren auf einem Doppelwellenextruder homogenisiert.

Die Herstellung der Prüfkörper erfolgte bei 310 °C Massetemperatur auf einem Spritzgießapparat.

Zur Beurteilung des Verarbeitungsverhaltens wurden auf einem sogenannten Streifenwerkzeug mit zentralem Stangenanguß Streifen (Maße: 435 mm x 50 mm x 2 mm) hergestellt, deren Oberfläche insbesondere in Angußnähe ohne optische Hilfsmittel auf das Auftreten von Delaminierungen und Oberflächenstörungen (z.B. matte Flecken) untersucht wurde.

Die Bestimmung der kritischen Temperatur $T_K$ (Übergangvon Zähbruch- nach Sprödbruch) erfolgte am ASTM-Stab durch den IZOD-Schlagbiegeversuch nach ISO 180 A.

Zur Bestimmung der Benzinbeständigkeit wurden Prüfkörper mit den Maßen 80 mm x 10 mm x 4 mm hergestellt, die auf Biegeschablonen verschiedener Krümmungsradien so eingespannt wurden, daß Randfaserdehnungen $\epsilon_R$ von 0,4 % bzw. 1,0 % resultieren. Die Schablonen wurden mit aufgebrachter Probe 15 Minuten bei 70 °C in einem Wärmeschrank (mit Luftdurchwirbelung nach DIN 50 011, 2, 3) gelagert.

Die Schablonen mit den Proben wurden aus dem Schrank entnommen und unmittelbar danach ein Prüfkraftstoffgetränkter Wattebausch aufgelegt. Als Prüfkraftstoff wurde ein Testbenzin nach DIN 51604 verwendet, das sich aus 50 Vol.-% Toluol, 30 Vol.-% Isooctan, 15 Vol.-% Diisobutylen und 5 Vol.-% Ethanol zusammensetzt. Nach 15 Minuten Einwirkungsdauer wurde der Wattebausch entfernt und weitere 15 Minuten abgewartet, um die Probe ablüften zu lassen.

Anschließend wurden die Prüfkörper mit dem unbewaffneten Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Ergebnisse sind in folgender Tabelle zusammengefaßt.

| Beispiel | 1 | 2 | 3 | 4* | 5* |
|---|---|---|---|---|---|
| **Komponenten:** | | - Gew.-% - | | | |
| a) | 100 | 98 | 99,9 | 97,9 | 97,5 |
| c) | - | 2 | - | 2,0 | 2,0 |
| d 1) | - | - | 0,1 | 0,1 | 0,5 |
| d 2) | - | - | - | - | - |
| **Delaminierung** | - | wenig | nein | nein | nein |
| **Oberfläche** | gut | gut | gut | gut | gut |
| $T_K$/°C | -60 | -55 | <-60 | <-60 | <-60 |
| **Benzinbeständigkeit** | | | | | |
| $\varepsilon_R$ 0,4 % | 3 | 3 | 3 | 2 | 2 |
| $\varepsilon_R$ 1,0 % | 4 | 3 | 4 | 2 | 2 |

| Beispiel | 6* | 7* | 8* | 9* |
|---|---|---|---|---|
| **Komponenten:** | | - Gew.-% - | | |
| a) | 97,0 | 97,9 | 97,5 | 95,5 |
| c) | 2,0 | 2,0 | 2,0 | 2,0 |
| d 1) | 1,0 | - | - | - |
| d 2) | - | 0,1 | 0,5 | 2,5 |
| **Delaminierung** | nein | nein | nein | nein |
| **Oberfläche** | gut | gut | gut | gut |
| $T_K$/°C | < -60 | <-60 | <-60 | <-60 |
| **Benzinbeständigkeit** | | | | |
| $\varepsilon_R$ 0,4 % | 2 | 2 | 2 | 2 |
| $\varepsilon_R$ 1,0 % | 2 | 3 | 3 | 2 |

***) = erfindungsgemäße Beispiele**

**Patentansprüche**

**Patentansprüche für folgende Vertragsstaaten : DE, FR, GB, IT, NL**

1. Mischungen, enthaltend

a) 75 - 98,99 Gew. -Teile PolydiorganosiloxanPolycarbonat-Blockcokondensate mit mittlerem Molekulargewicht $\overline{M}_w$ von 10.000 bis 200.000 und mit einem Gehalt an aromatischen Carbonatstruktureinheiten zwischen 90 Gew.-% und 99,5 Gew.-% und einem Gehalt an Polydiorganosiloxanstruktureinheiten zwischen 10 Gew.-% und 0,5 Gew.-%, wobei die Blockcopolymeren ausgehend von $\alpha,\omega$-Bishydroxyaryloxyendgruppenhaltigen Polydiorganosiloxanen mit einem Polymerisationsgrad $P_n$ von 5 bis 100 hergestellt werden,
oder eine Mischung aus Polydiorganosiloxan-Polycarbonat-Blockcokondensaten mit polysiloxanfreien, thermoplastischen Polycarbonaten, wobei der Gesamtgehalt an Polydiorganosiloxanstruktureinheiten in dieser Mischung zwischen 0,5 und 10 Gew.-% beträgt, und
c) 1 bis 10 Gew.-Teile kautschukelastische Polymerisate mit einer Glasübergangstemperatur unter -20 °C,
dadurch gekennzeichnet, daß sie
d) 0,01 bis 5 Gew.-Teile eines Phenylgruppen enthaltenden Polysiloxans enthalten, wobei das Polysiloxan eine relative Viskosität zwischen 100 und 5000 $mm^2/s$ (gemessen mit dem Kugelfallviskosimeter bei 25 °C) hat und die Summe der Gewichtsteile aus den Komponenten a + c + d 100 Gew.-Teile betragen soll.

**2.** Mischungen gemäß Anspruch 1, dadurch gekennzeichnet, daß die Komponente a) 7 Gew.-% bis 1 Gew.-% an Polydiorganosiloxanstruktureinheiten hat.

**3.** Mischungen gemäß Anspruch 1, dadurch gekennzeichnet, daß die Komponente a) Polydiorganosiloxane mit einem Polymerisationsgrad $P_n$ von 20 bis 80 einkondensiert enthält.

**4.** Mischungen gemäß Anspruch 1, enthaltend 0,05 Gew.-% bis 3 Gew.-Teile an Komponente d).

**5.** Mischungen gemäß Anspruch 1, dadurch gekennzeichnet, daß sie zusätzlich mindestens ein Additiv, ausgewählt aus Fließmitteln, Entformungsmitteln, Füllstoffen, Verstärkungsstoffen, Pigmenten und Flammschutzmitteln enthalten.

**6.** Verfahren zur Herstellung der Mischungen des Anspruchs 1, dadurch gekennzeichnet, daß man die Komponenten a), d) mit c) in geeigneten Mischaggregaten in der Schmelze bei Temperaturen zwischen 280 °C und 320 °C vermischt, anschließend in üblicher Weise abkühlt und granuliert oder sogleich zu geeigneten Formkörpern verarbeitet.

**7.** Verfahren zur Herstellung der Mischungen des Anspruchs 5 gemäß Anspruch 6, dadurch gekennzeichnet, daß man mindestens ein Additiv, ausgewählt aus Fließmitteln, Entformungsmitteln, Füllstoffen, Verstärkungsstoffen, Pigmenten und Flammschutzmitteln einbezieht.

**Patentansprüche für folgenden Vertragsstaat : ES**

**1.** Verfahren zur Herstellung von Mischungen enthaltend
a) 75 - 98,99 Gew.-Teile Polydiorganosiloxan-Polycarbonat-Blockcokondensate mit mittlerem Molekulargewicht $\overline{M}_w$ von 10.000 bis 200.000 und mit einem Gehalt an aromatischen Carbonatstruktureinheiten zwischen 90 Gew.-% und 99,5 Gew.-% und einem Gehalt an Polydiorganosiloxanstruktureinheiten zwischen 10 Gew.-% und 0,5 Gew.-%, wobei die Blockcopolymeren ausgehend von $\alpha,\omega$-Bishydroxyaryloxyendgruppenhaltigen Polydiorganosiloxanen mit einem Polymerisationsgrad $P_n$ von 5 bis 100 hergestellt werden,
oder eine Mischung aus PolydiorganosiloxanPolycarbonat-Blockcokondensaten mit polysiloxanfreien, thermoplastischen Polycarbonaten, wobei der Gesamtgehalt an Polydiorganosiloxanstruktureinheiten in dieser Mischung zwischen 0,5 und 10 Gew.-% beträgt,
und
c) 1 bis 10 Gew.-Teile kautschukelastische Polymerisate mit einer Glasübergangstemperatur unter -20 °C,
dadurch gekennzeichnet, daß sie
d) 0,01 bis 5 Gew.-Teile eines Phenylgruppen enthaltenden Polysiloxans enthalten, wobei das Polysiloxan eine relative Viskosität zwischen 100 und 5000 $mm^2/s$ (gemessen mit dem Kugelfallviskosimeter bei 25 °C) hat und die Summe der Gewichtsteile aus den Komponenten a + b + c + d 100 Gew.-Teile betragen soll,
wobei man die Komponenten a), d) mit c) in geeigneten Mischaggregaten in der Schmelze bei Temperaturen zwischen 280 °C und 320 °c vermischt, anschließend abkühlt und granuliert oder sogleich zu geeigneten Formkörpern verarbeitet.

**2.** Verfahren gemäß Anspruch 1, worin die Komponente a) 7 Gew.-% bis 1 Gew.-% an Polydiorganosiloxanstruktureinheiten hat.

**3.** Verfahren gemäß Anspruch 1, worin die Komponente a) Polydiorganosiloxane mit einem Polymerisationsgrad $P_n$ von 20 bis 80 einkondensiert enthält.

**4.** Verfahren gemäß Anspruch 1, wobei die Mischung 0,05 Gew.-% bis 3 Gew.-Teile an Komponente d) enthält.

**5.** Verfahren gemäß Anspruch 1, wobei zusätzlich mindestens ein Additiv, ausgewählt aus Fließmitteln, Entformungsmitteln, Füllstoffen, Verstärkungsstoffen, Pigmenten und Flammschutzmitteln zugemischt werden.

**Claims**
**Claims for the following Contracting States : DE, FR, GB, IT, NL**

**1.** Mixtures containing

a) 75 to 98.99 parts by weight of polydiorganosiloxanepolycarbonate block co-condensates having an average molecular weight $\overline{M}_w$ in the range from 10,000 to 200,000 and containing between 90% by weight and 99.5% by weight of aromatic carbonate structural units and between 10% by weight and 0.5% by weight of polydiorganosiloxane structural units, the block copolymers being produced from $\alpha,\omega$-bishydroxyaryloxy-terminated polydiorganosiloxanes having a degree of polymerization $P_n$ of from 5 to 100

or a mixture of polydiorganosiloxane-polycarbonate block co-condensates with polysiloxane-free thermoplastic polycarbonates, the total content of polydiorganosiloxane structural units in this mixture being between 0.5 and 10% by weight, and

c) 1 to 10 parts by weight of rubber-elastic polymers having a glass transition temperature below -20 °C,

characterized in that they contain

d) 0.01 to 5 parts by weight of a low molecular weight polysiloxane containing phenyl groups, the polysiloxane having a relative viscosity of 100 to 5,000 $mm^2/s$ (as measured with a falling ball viscosimeter at 25 °C) and the sum of the parts by weight of components a + c + d having to amount to 100 parts by weight.

**2.** Mixtures as claimed in claim 1, characterized in that component a) contains 7% by weight to 1% by weight of polydiorganosiloxane structural units.

**3.** Mixtures as claimed in claim 1, characterized in that component a) contains polydiorganosiloxanes having a degree of polymerization $P_n$ of 20 to 80 in co-condensed form.

**4.** Mixtures as claimed in claim 1 containing from 0.05% by weight to 3 parts by weight of component d).

**5.** Mixtures as claimed in claim 1, characterized in that they additionally contain at least one additive selected from flow aids, mold release agents, fillers, reinforcing materials, pigments and flameproofing agents.

**6.** A process for the production of the mixtures claimed in claim 1, characterized in that components a), d) are mixed with c) in the melt in suitable mixing units at temperatures in the range from 280 °C to 320 °C, the resulting mixture is cooled and granulated in the usual way or directly processed to suitable moldings.

**7.** A process as claimed in claim 6 for the production of the mixtures claimed in claim 5, characterized in that at least one additive selected from flow aids, mold release agents, fillers, reinforcing materials, pigments and flameproofing agents is incorporated.

**Claims for the following Contracting State : ES**

**1.** A process for the production of mixtures containing

a) 75 to 98.99 parts by weight of polydiorganosiloxanepolycarbonate block co-condensates having an average molecular weight $\overline{M}_w$ in the range from 10,000 to 200,000 and containing between 90% by weight and 99.5% by weight of aromatic carbonate structural units and between 10% by weight and 0.5% by weight of polydiorganosiloxane structural units, the block copolymers being produced from $\alpha,\omega$-bishydroxyaryloxy-terminated polydiorganosiloxanes having a degree of polymerization $P_n$ of from 5 to 100

or a mixture of polydiorganosiloxane-polycarbonate block co-condensates with polysiloxane-free thermoplastic polycarbonates, the total content of polydiorganosiloxane structural units in this mixture being between 0.5 and 10% by weight, and

c) 1 to 10 parts by weight of rubber-elastic polymers having a glass transition temperature below -20 °C,

characterized in that they contain

d) 0.01 to 5 parts by weight of a low molecular weight polysiloxane containing phenyl groups, the polysiloxane having a relative viscosity of 100 to 5,000 $mm^2/s$ (as measured with a falling ball viscosimeter at 25 °C) and the sum of the parts by weight of components a + c + d having to amount to 100 parts by weight,

components a), d) being mixed with c) in the melt in suitable mixing units at temperatures in the range from 280 °C to 320 °C, the resulting mixture being cooled and granulated in the usual way or being directly processed to suitable moldings.

**2.** A process as claimed in claim 1, in which component a) contains 7% by weight to 1% by weight of polydiorganosiloxane structural units.

**3.** A process as claimed in claim 1, in which component a) contains polydiorganosiloxanes having a degree of polymerisation $P_n$ of 20 to 80 in co-condensed form.

**4.** A process as claimed in claim 1, the mixture containing from 0.05% by weight to 3 parts by weight of component d).

**5.** A process as claimed in claim 1, at least one additive selected from flow aids, mold release agents, fillers, reinforcing materials, pigments and flameproofing agents being additionally incorporated.

**Revendications**
**Revendications pour les Etats contractants suivants : DE, FR, GB, IT, NL**

**1.** Mélanges contenant

a) 75-98,99 parties en poids de cocondensats séquencés polydiorganosiloxane-polycarbonate de poids moléculaire moyen $\overline{M}_p$ allant de 10 000 à 200 000 et ayant une teneur en motifs structuraux carbonate aromatiques entre 90 % en poids et 99,5 % en poids et une teneur en motifs structuraux polydiorganosiloxane entre 10 % en poids et 0,5 % en poids, les copolymères séquencés étant produits à partir de polydiorganosiloxanes contenant des groupes terminaux $\alpha,\omega$-bishydroxyaryloxy ayant un degré de polymérisation $P_n$ de 5 à 100,

ou un mélange de cocondensats séquencés polydiorganosiloxane-polycarbonate avec des polycarbonates thermoplastiques dépourvus de polysiloxane,

la teneur totale en motifs structuraux polydiorganosiloxane de ce mélange s'élevant entre 0,5 et 10 % en poids,

c) 1 à 10 parties en poids de polymères ayant l'élasticité du caoutchouc, présentant une température de transition vitreuse inférieure à -20 °C,

caractérisés en ce qu'ils contiennent

d) 0,01 à 5 parties en poids d'un polysiloxane contenant des groupes phényle, le polysiloxane ayant une viscosité relative entre 100 et 5000 $mm^2/s$ (mesurée au viscosimètre à bille tombante à 25 °C) et la somme des parties en poids des composants a + c + d devant s'élever à 100 parties en poids.

**2.** Mélanges suivant la revendication 1, caractérisés en ce que le composant a) contient 7 à 1 parties en poids de motifs structuraux polydiorganosiloxane.

**3.** Mélanges suivant la revendication 1, caractérisés en ce que le composant a) contient des polydiorganosiloxanes à degré de polymérisation $P_n$ de 20 à 80, incorporés par condensation.

**4.** Mélanges suivant la revendication 1, contenant 0,05 % en poids à 3 parties en poids de composant d).

**5.** Mélanges suivant la revendication 1, caractérisés en ce qu'ils contiennent en outre au moins un additif choisi entre des agents d'écoulement, des agents de démoulage, des charges, des matières de renforcement, des pigments et des agents retardateurs de flamme.

**6.** Procédé de production des mélanges suivant la revendication 1, caractérisé en ce qu'on mélange les composants a), d) avec c) dans des appareils mélangeurs appropriés, à l'état fondu à des températures comprises entre 280 °C et 320 °C, puis on refroidit le mélange d'une manière classique et on le granule ou bien on le transforme immédiatement en pièces façonnées appropriées.

**7.** Procédé suivant la revendication 6 de production des mélanges suivant la revendication 5, caractérisé en ce qu'on incorpore au moins un additif choisi parmi des agents d'écoulement, des agents de démoulage, des charges, des matières de renforcement, des pigments et des retardateurs de flamme.

**Revendications pour l'Etat contractant suivant : ES**

**1.** Procédé de production de mélanges contenant

a) 75-98,99 parties en poids de cocondensats séquencés polydiorganosiloxane-polycarbonate de poids moléculaire moyen $\overline{M}_p$ allant de 10 000 à 200 000 et ayant une teneur en motifs structuraux carbonate aromatiques entre 90 % en poids et 99,5 % en poids et une teneur en motifs structuraux polydiorganosiloxane entre 10 % en poids et 0,5 % en poids, les copolymères séquencés étant produits à partir de polydiorganosiloxanes contenant des groupes terminaux $\alpha,\omega$-bishydroxyaryloxy ayant un degré de polymérisation $P_n$ de 5 à 100,
ou un mélange de cocondensats séquencés polydiorganosiloxane-polycarbonate avec des polycarbonates thermoplastiques dépourvus de polysiloxane,
la teneur totale en motifs structuraux polydiorganosiloxane de ce mélange s'élevant entre 0,5 et 10 % en poids,
c) 1 à 10 parties en poids de polymères ayant l'élasticité du caoutchouc, présentant une température de transition vitreuse inférieure à -20 °C,
caractérisés en ce qu'ils contiennent
d) 0,01 à 5 parties en poids d'un polysiloxane contenant des groupes phényle, le polysiloxane ayant une viscosité relative entre 100 et 5000 $mm^2/s$ (mesurée au viscosimètre à bille tombante à 25 °C) et la somme des parties en poids des composants a + c + d devant s'élever à 100 parties en poids,

dans lequel on mélange les composants a), d) avec c) dans les appareils mélangeurs appropriés, à l'état fondu à des températures comprises entre 280 °C et 320 °C puis on refroidit le mélange et on le granule ou on le transforme immédiatement en pièces façonnées appropriées.

**2.** Procédé suivant la revendication 1, dans lequel le composant a) contient 7 % en poids à 1 % en poids de motifs structuraux polydiorganosiloxane.

**3.** Procédé suivant la revendication 1, dans lequel le composant a) contient des polydiorganosiloxanes ayant un degré de polymérisation $P_n$ de 20 à 80, incorporés par condensation.

**4.** Procédé suivant la revendication 1, dans lequel le mélange contient 0,05 % en poids à 3 parties en poids de composant d).

**5.** Procédé suivant la revendication 1, dans lequel on incorpore en outre au moins un additif choisi entre des agents d'écoulement, des agents de démoulage, des charges, des matières de renforcement, des pigments et des agents retardateurs de flamme.